# FASCICULE DE BREVET EUROPEEN

(11) **EP 2 857 364 B1**
(45) Date de publication et mention de la délivrance du brevet: **08.03.2017**
(21) Numéro de dépôt: 14187310.9
(22) Date de dépôt: 01.10.2014
(51) Int. Cl.: C03B 9/32, C03B 9/34, C03B 9/36, B65D 1/02, C03B 9/325, C03B 9/347, C03B 9/447

(54) **DISPOSITIF POUR FORMER UN ARTICLE CREUX EN VERRE COMPRENANT UN MOULE DESTINÉ À RECEVOIR UNE ÉBAUCHE ET PROCÉDÉ ASSOCIÉ**
VORRICHTUNG ZUR BILDUNG EINES HOHLGLASARTIKELS, DIE EINE FORM ZUR AUFNAHME EINES ROHLINGS UMFASST UND DAZU GEHÖRENDES VERFAHREN
DEVICE FOR FORMING A HOLLOW GLASS ITEM INCLUDING A MOULD FOR RECEIVING A BLANK AND PROCESS THEREOF

(30) Priorité: 01.10.2013 FR 1359510
(43) Date de publication de la demande: 08.04.2015
(73) Titulaire: Pochet du Courval, 75010 Paris (FR)
(72) Inventeur: Mayeu, Patrice, 76340 Blangy-sur-Bresle (FR); Guerout, Sébastien, 76340 Monchaux Soreng (FR)
(74) Mandataire: Lavoix

(56) Documents cités:
- WO-A1-99/42411
- DE-A1- 3 908 122
- FR-A1- 2 772 020
- FR-A1- 2 978 440
- US-A1- 2004 079 769

## Description

La présente invention concerne un dispositif selon le préambule de la revendication 1.

L'invention concerne aussi un procédé correspondant et l'article creux en verre obtenu.

L'article est par exemple un flacon ou un pot, par exemple un flacon destiné à la parfumerie.

Un procédé connu de fabrication d'article creux en verre est le procédé soufflé-soufflé. Une paraison de verre fondu est introduite dans un moule ébaucheur. Un jet de gaz sous pression, par exemple de l'air, est injecté dans le moule ébaucheur pour transformer la paraison en une ébauche de l'article.

L'ébauche ainsi réalisée est transférée dans un moule finisseur. Le moule finisseur définit une ouverture pour le passage de la bague. Une seconde injection de gaz sous pression est réalisée dans l'ébauche à travers la bague par une tête de soufflage placée sur l'ouverture du moule finisseur. L'ébauche prend alors la forme de l'empreinte définie par le moule finisseur, ce qui donne au corps et aux épaules de l'article creux en verre leurs formes externes.

Un moule finisseur classique comprend au moins deux demi-moules adaptés pour s'écarter l'un de l'autre après le soufflage de façon à permettre le démoulage de l'article creux en verre. Bien que permettant d'obtenir des articles présentant une grande variété de formes, un tel moule limite néanmoins les possibilités pour la forme des articles, en particulier au niveau des épaules.

Par ailleurs, le FR-A-2 772 020 décrit un dispositif pour obtenir par moulage des articles en verre présentant une portion en creux autour du col.

US-A-2004/079769 divulgue un article creux pouvant être en verre.

Un but de l'invention est donc de fournir un dispositif pour former un article creux en verre à partir d'une ébauche, le dispositif permettant d'obtenir une plus grande variété de formes d'épaules.

A cet effet, l'invention a pour objet un dispositif selon la revendication 1.

Selon des modes particuliers de réalisation, la machine d'impression comprend l'une ou plusieurs des caractéristiques des revendications 2 à 8, prises isolément ou selon toutes les combinaisons techniquement possibles.

L'invention concerne également un procédé selon la revendication 9.

On décrit aussi un article creux en verre obtenu par le procédé ci-dessus, l'article comportant une bague s'étendant autour d'un axe, un corps, et une ou plusieurs épaule(s) s'étendant entre la bague et le corps, la partie de la ou des épaule(s) formée par la face comportant au moins une portion située dans un secteur angulaire par rapport à l'axe, ladite portion étant en contre-dépouille par rapport au déplacement d'une des parties du moule située dans le secteur angulaire.

L'invention sera mieux comprise à la lecture de la description qui va suivre, donnée uniquement à titre d'exemple et faite en se référant aux dessins annexés, sur lesquels :
- la figure 1 est une vue schématique d'un dispositif selon un premier mode de réalisation de l'invention, le moule étant dans la configuration ouverte et la tête de soufflage étant dans la position de repos,
- la figure 2 est une vue schématique d'une partie inférieure de la tête de soufflage du dispositif représenté sur la figure 1,
- la figure 3 est une vue schématique, de face, d'un premier article selon l'invention, produit à l'aide du dispositif représenté sur les figures 1 et 2,
- la figure 4 une vue schématique d'un dispositif selon un second mode de réalisation de l'invention, le moule étant dans la configuration ouverte et la tête de soufflage étant dans la position de repos,
- la figure 5 est une vue schématique d'une partie inférieure de la tête de soufflage du dispositif représenté sur la figure 4, et
- la figure 6 est une vue schématique, de face, d'un second article selon l'invention, produit à l'aide du dispositif représenté sur les figures 4 et 5.

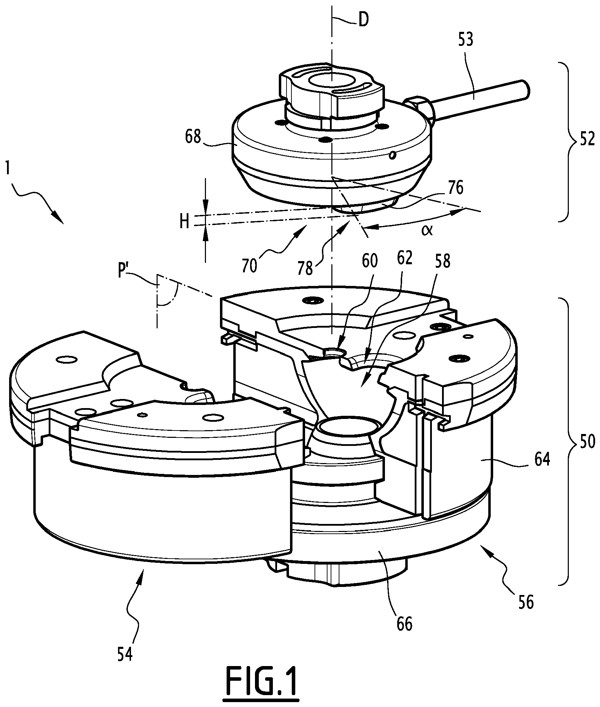

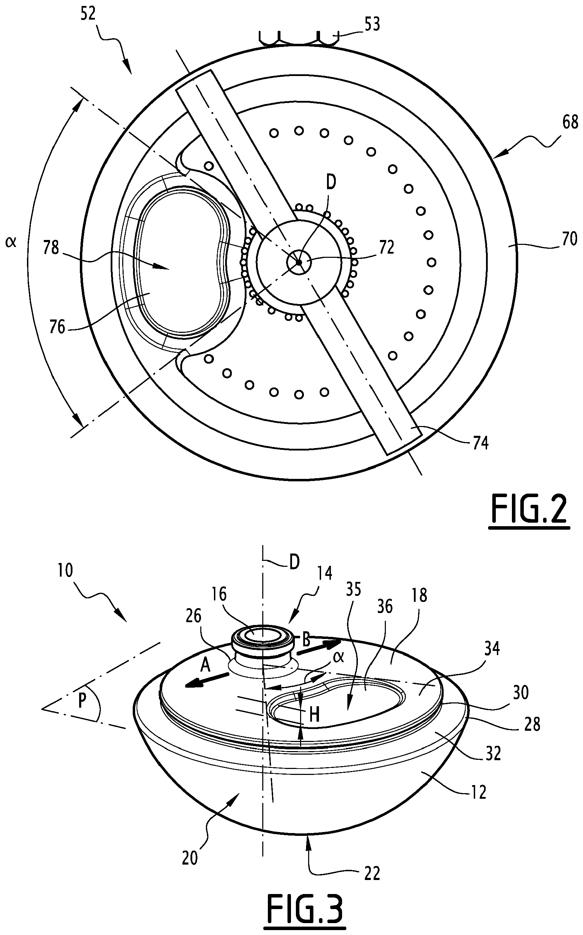

En référence aux figures 1 et 2, on décrit un dispositif 1 selon un premier mode de réalisation de l'invention. Le dispositif 1 permet d'obtenir un premier article 10 creux en verre visible sur la figure 3.

Le premier article 10 comprend un corps 12, une bague 14 définissant une ouverture 16 d'axe D, et des épaules 18 s'étendant entre le corps 12 et la bague 14.

Dans l'exemple représenté, l'axe D est sensiblement vertical lorsque l'article est posé une un support horizontal. L'axe D est sensiblement vertical lorsque l'article 10 se trouve dans le dispositif 1.

Le corps 12 comporte une surface latérale 20 courbe et définit un fond 22 permettant de poser le premier article 10 sur un support plan (non représenté). Le corps 12 présente par exemple une forme de coupelle.

La bague 14 présente une forme générale cylindrique d'axe D à base circulaire. La bague 14 est destinée à recevoir un capuchon (non représenté) ou un embout (non représenté) destiné à recevoir le capuchon. Par « bague », on entend, au sens de la présente demande, un goulot.

Les épaules 18 s'étendent à partir de la bague 14 dans toutes les directions jusqu'au corps 12, par exemple sensiblement selon un plan P perpendiculaire à l'axe D.

Les épaules 18 s'étendent depuis une ligne fermée 26 correspondant à une zone de courbure maximale située au pied de la bague 14, jusqu'à une arête 28 correspondant à une zone de rencontre de la surface latérale 20 avec le plan P.

La ligne 26 et l'arête 28 sont par exemple circulaires.

Dans certaines variantes de l'article creux en verre (non représentées), les épaules et le corps sont en continuité l'un de l'autre, si bien que la limite entre corps et épaules est arbitraire. Les épaules sont en tout état de cause définies comme une portion de l'article située au voisinage de la bague et en contact avec elle.

Les épaules 18 comprennent un épaulement 30 définissant une portion périphérique 32 des épaules 18, par exemple de forme annulaire, et une portion centrale 34.

La portion périphérique 32 et la portion centrale 34 sont sensiblement orthogonales à l'axe D.

La portion centrale 34 comporte une partie 35 formant par exemple un motif 36 en creux situé dans un secteur angulaire α par rapport à l'axe D.

La partie 35 présente par exemple une surface d'au moins 1 cm², par exemple au moins 2 cm² en projection sur un plan donné, par exemple le plan P.

Le motif 36 présente par exemple une forme oblongue en projection sur le plan P. Le motif 36 présente par exemple une profondeur H sensiblement constante selon l'axe D.

La profondeur H est par exemple comprise entre 0,5 et 5 mm.

On parlera d'épaules 18, au pluriel, lorsque les épaules 18 s'étendent à partir de la bague 14 sur au moins deux côtés par rapport à l'axe D, par exemple les côtés représentés par les flèches A et B sur la figure 3.

On parlera d'épaule, au singulier, lorsque l'article creux en verre ne s'étend que d'un seul côté de la bague (cas non représenté).

Comme visible sur la figure 1, le dispositif 1 comprend un moule finisseur 50 destiné à recevoir une ébauche (non représentée) du premier article 10, une tête de soufflage 52, et un bras 53 portant la tête de soufflage.

Dans l'exemple représenté sur la figure 1, le moule finisseur 50 comprend deux parties 54, 56 formant deux demi moules.

Grâce à un système de déplacement (non représenté), les parties 54, 56 sont mobiles entre une configuration fermée (non représentée), dans laquelle les parties 54, 56 sont appliquées l'une contre l'autre et définissent une première empreinte 58 adaptée pour former le corps 12 de l'article 10, et une configuration ouverte (figure 1), dans laquelle les parties 54, 56 du moule sont écartées l'une par rapport à l'autre pour démouler l'article 10.

Dans la configuration ouverte, les parties 54, 56 sont par exemple écartées l'une de l'autre sensiblement perpendiculairement à l'axe D.

Dans la configuration fermée, les parties 54, 56 sont appliquées l'une contre l'autre, par exemple selon un plan P'. La configuration fermée se déduit de la configuration ouverte représentée sur la figure 1 par une translation des parties 54, 56 l'une vers l'autre.

Dans l'exemple représenté sur la figure 1, la première empreinte 58 est en outre adaptée pour former les épaules 18 à l'exception de la partie 35. La première empreinte 58 comporte une première ouverture 60 adaptée pour laisser passer la bague 14, et une seconde ouverture 62 destinée à être située en regard de la partie 35.

La partie 54 du moule 50 définit une moitié de la première ouverture 60 située d'un côté du plan P', et une moitié de la seconde ouverture 62 située du même côté du plan P'. La partie 54 définit une portion de la première empreinte 58 correspondant à une moitié de la surface latérale 20 du corps 12 située du même côté du plan P'.

La partie 56 comprend une portion 64 sensiblement symétrique de la partie 54 par rapport au plan P', et un fond 66.

La partie 56 définit l'autre moitié de la première ouverture 60 située de l'autre côté du plan P', et l'autre moitié de la seconde ouverture 62 située également de l'autre côté du plan P'. La partie 56 définit une portion de la première empreinte 58 correspondant à l'autre moitié de la surface latérale 20 du corps 12 située également de l'autre côté du plan P'.

Le fond 66 du moule 50 définit une partie de la première empreinte 58 correspondant au fond 22 de l'article 10.

Le bras 53 est destiné à être connecté à des moyens de déplacement adaptés pour faire passer la tête de soufflage 52 d'une position de repos, dans laquelle la tête de soufflage est à l'écart du moule 50 (figure 1), à une position de soufflage, dans laquelle la tête de soufflage est appliquée contre le moule, et réciproquement de la position de soufflage à la position de repos. Le bras 53 est par exemple adapté pour déplacer la tête de soufflage 52 en un seul bloc, sensiblement selon l'axe D du premier article 10, entre la position de soufflage et la position de repos.

La tête de soufflage 52 est destinée à être connectée à une source de gaz (non représentée), par exemple de l'air. La tête de soufflage 52 comprend un corps 68 sensiblement de révolution autour de l'axe D.

Le corps 68 comporte une partie inférieure 70, propre à s'appliquer contre le moule 50 dans sa configuration fermée lorsque la tête de soufflage 52 est dans la position de soufflage.

La partie inférieure 70 comporte un orifice 72 prévu pour laisser passer un jet d'air (non représenté) destiné à entrer dans l'ébauche de l'article 10. La partie inférieure 70 comprend une rainure diamétrale 74 s'étendant de part et d'autre de l'orifice 72, et une face 76 protubérante par rapport au reste de la partie inférieure.

La rainure 74 est adaptée pour coopérer avec le moule 50 dans sa configuration fermée pour former deux canaux d'échappement d'air.

La face 76 possède une forme complémentaire de la partie 35 des épaules 18. La face 76 forme une deuxième empreinte 78 adaptée pour former le motif 36 dans la position de soufflage.

La face 76 est située dans le même secteur angulaire α par rapport à l'axe D que la partie 35. Les parties 54, 56 du moule 50 sont partiellement situées dans le secteur angulaire α. Le motif 36 est en contre-dépouille par rapport au déplacement des parties 54, 56 depuis la configuration fermée vers la configuration ouverte.

Le fonctionnement du dispositif 1 va maintenant être décrit.

Grâce aux moyens de déplacement, le moule 50 est mis dans sa configuration fermée dans laquelle il définit la première empreinte 58, la tête de soufflage 52 se situant dans la position de repos. L'ébauche (non représentée) du premier article 10 est alors introduite dans le moule 50.

Puis, la tête de soufflage 52 est abaissée par le bras 53 de la position de repos à la position de soufflage. L'orifice 72 vient se placer en vis-à-vis de la première ouverture 60 de la première empreinte 58. La face 76, qui forme la deuxième empreinte 78, vient fermer la seconde ouverture 62. La première empreinte 58 et la deuxième empreinte 78 se complètent pour former une empreinte complète pour former le corps 12 et les épaules 18.

De l'air est injecté dans le corps 68 de la tête de soufflage 52 et débouche en un jet par l'orifice 72. Le jet d'air entre dans l'ébauche et la gonfle. L'ébauche prend la forme de la première empreinte 58 et de la seconde empreinte 78. L'air injecté s'échappe par les canaux formés par la rainure 74 de la tête de soufflage 52.

La première empreinte 58 donne leurs formes externes (visibles sur la figure 3) aux épaules 18 à l'exception de la partie 35. La deuxième empreinte 78 donne sa forme externe à la partie 35. La deuxième empreinte 78 crée le motif 36.

Puis la tête de soufflage est replacée dans la position de repos. Le premier article 10 est démoulé faisant passer le moule 50 de la configuration fermée à la configuration ouverte, et la tête de soufflage 52 de la position de soufflage à la position de repos. Le corps 12 et les épaules 18, à l'exception du motif 36, sont en dépouille par rapport au mouvement des parties 54, 56 du moule 50 lors du démoulage.

En revanche, le motif 36 est en contre-dépouille par rapport au mouvement des parties 54, 56 lors du démoulage. Le motif 36 est en dépouille par rapport au mouvement de la face 76 lors du démoulage. Dit autrement, il ne serait pas possible de démouler le premier article 10 si la face 76 était solidaire de l'une ou l'autres des parties 54, 56 du moule 50.

Grâce aux caractéristiques décrites ci-dessus, le dispositif 1 permet d'obtenir un premier article 10 comportant les épaules 18 présentant le motif 36 en creux. Le premier article 10 aurait été impossible à démouler dans un moule finisseur de l'état de la technique. Le dispositif 1 permet donc d'obtenir une plus grande variété de formes pour les épaules 18 de l'article 10.

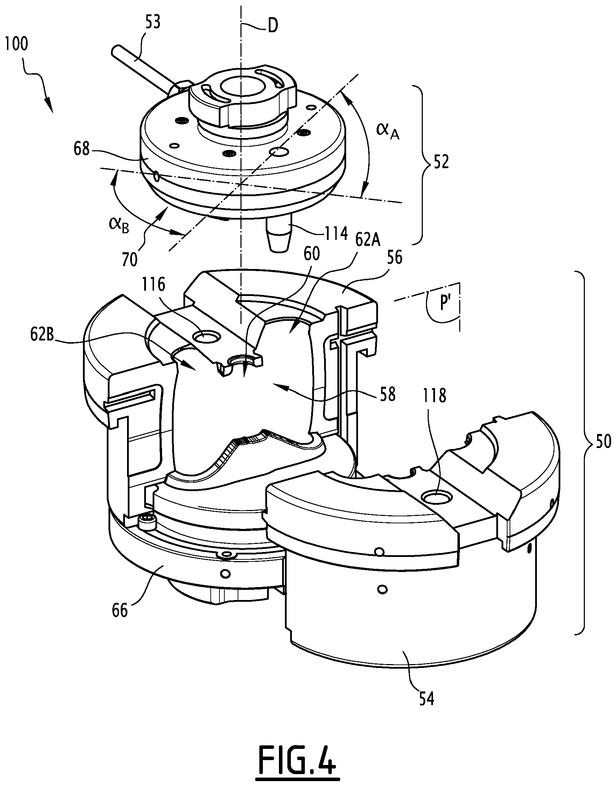

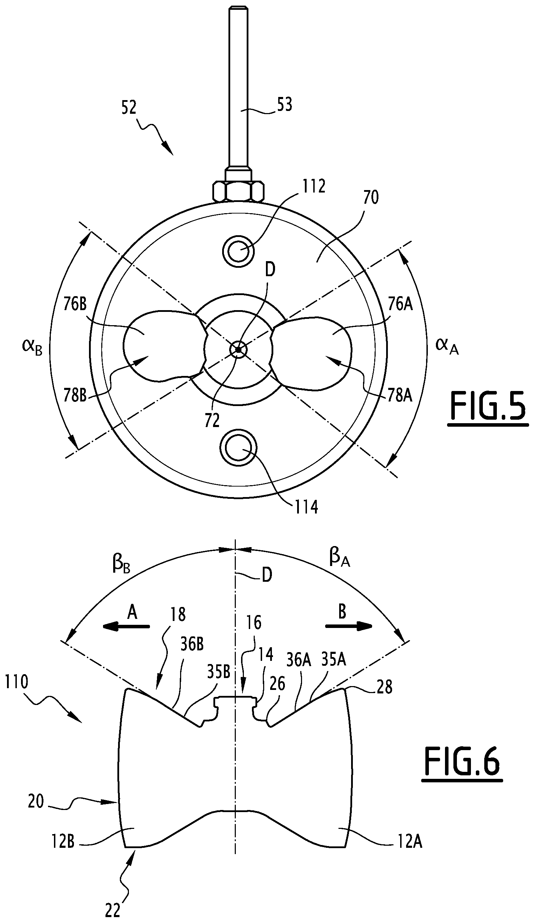

En référence aux figures 4 et 5, on va maintenant décrire un dispositif 100 constituant un second mode de réalisation de l'invention. Le dispositif 100 permet d'obtenir un second article 110 creux en verre représenté sur la figure 6.

Le dispositif 100 et le second article 110 sont analogues respectivement au dispositif 1 et au premier article 10 représentés sur les figures 1 à 3. Les éléments similaires portent les mêmes références et ne seront pas décrits à nouveau. Seules les différences seront décrites en détail ci-après.

Le second article 110 présente une forme générale en papillon (figure 6), c'est à dire que le corps 12 et les épaules 18 forment deux lobes 12A, 12B s'évasant à partir de l'axe D de part et d'autre de l'axe D.

Les épaules 18 comportent deux parties 35A, 35B s'étendant de part et d'autre de l'axe D. Les épaules 18 présentent une forme générale s'évasant du côté de la bague 14.

Les parties 35A, 35B présentent une forme générale plane, et définissent avantageusement en surface des motifs 36A, 36B en relief et en creux (non représentés en détail), par exemple en forme de rides ou de vagues.

Chacune des parties 35A, 35B présente par exemple une surface d'au moins 1 cm², par exemple au moins 2 cm² en projection sur un plan donné, par exemple le plan P'.

Les parties 35A, 35B s'étendent respectivement dans des secteurs angulaires α_{A}, α_{B} par rapport à l'axe D.

Les parties 35A, 35B forment des angles aigus β_{A}, β_{B} avec l'axe D.

Les angles aigus β_{A}, β_{B} s'ouvrent du côté opposé au corps 12 selon l'axe D, c'est à dire vers le haut de la figure 3 dans l'exemple représenté.

De manière analogue au dispositif 1, le dispositif 100 (figures 4 et 5) comprend un moule 50 en deux parties 54, 56 définissant une première empreinte 58 lorsque le moule est dans une configuration fermée. Le dispositif 100 comprend aussi une tête de soufflage 52.

La première empreinte 58 est adaptée pour former le corps 12 du second article 110. La première empreinte 58 comporte une ouverture 60 pour la bague 14, une deuxième ouverture 62A et une troisième ouverture 62B

La deuxième ouverture 62A et la troisième ouverture 62B sont destinées respectivement à se situer en regard des parties 35A, 35B des épaules du second article 110.

La tête de soufflage 52 comprend une partie inférieure 70 comportant une première face 76A et une deuxième face 76B ayant respectivement des formes complémentaires des parties 35A, 35B.

La partie inférieure 70 porte avantageusement des organes de guidage 112, 114 propres à coopérer avec des organes de guidage 116, 118 situés sur le moule 50.

Par exemple, les organes de guidage 112, 114 sont des doigts, avantageusement orientés sensiblement selon l'axe D.

Par exemple, les organes de guidage 116, 118 sont des logements définis respectivement par les parties 54, 56 du moule 50, et adaptés pour recevoir les organes de guidage 112, 114 lorsque la tête de soufflage 52 est déplacée de la position de repos vers la position de soufflage.

Les faces 76A, 76B forment respectivement une deuxième empreinte 78A et une troisième empreinte 78B adaptées pour former les parties 35A, 35B, avantageusement avec leurs motifs 36A, 36B.

Les faces 76A, 76B se situent par exemple de part et d'autre de l'axe D dans la position de soufflage. Les faces 76A, 76B s'étendent respectivement dans les mêmes secteurs angulaires α_{A}, α_{B} par rapport à l'axe D. Les parties 54, 56 du moule 50 sont en partie situées dans chacun des secteurs angulaires α_{A}, α_{B}.

Le fonctionnement du dispositif 100 est analogue à celui du dispositif 1 et ne sera pas décrit en détail.

Lorsque la tête de soufflage 52 est abaissée par le bras 53 de la position de repos jusqu'à la position de soufflage, l'orifice 72 vient se placer en vis-à-vis de la première ouverture 60 de la première empreinte 58. Les faces 76A et 76B, qui forment la deuxième empreinte 78A et la troisième empreinte 78B, viennent fermer la seconde ouverture 62A et la troisième ouverture 62B. La première empreinte 58, la deuxième empreinte 78A et la troisième empreinte 78B se complètent pour former une empreinte complète propre à former le corps 12 et les épaules 18.

Pendant le soufflage du second article 110, la première empreinte 58 donne sa forme externe (visible sur la figure 6) au corps 12. La deuxième empreinte 78A et la troisième empreinte 78B donnent leurs formes externes aux parties 35A, 35B.

Lors du démoulage, le corps 12 est en dépouille par rapport au mouvement des parties 54, 56 du moule 50.

En revanche, les motif 36A, 36B sont en contre-dépouille par rapport au mouvement des parties 54, 56 lors du démoulage. Les motifs 36A, 36B sont en dépouille par rapport au mouvement des faces 76A, 76B lors du démoulage. Il ne serait pas possible de démouler le second article 110 si les faces 76A ou 76B étaient solidaires de l'une ou l'autre des parties 54, 56 du moule 50.

Grâce aux caractéristiques décrites ci-dessus, le dispositif 100 permet d'obtenir un premier article 110 comportant les épaules 18 comportant les parties 35A, 35B inclinées avec les motifs 36A, 36B en relief et creux. L'article 110 n'aurait pas été réalisable dans un moule finisseur de l'état de la technique. Le dispositif 100 permet donc d'obtenir une plus grande variété de formes pour les épaules 18 de l'article 110.

Dans l'invention, la tête de soufflage possède une double fonction de soufflage et de formage de l'article creux en verre.

## Revendications

1. Dispositif (1 ; 100) pour former un article (10 ; 110) creux en verre à partir d'une ébauche, l'article (10 ; 110) comportant une bague (14) s'étendant autour d'un axe (D), un corps (12), et une ou plusieurs épaule(s) (18) s'étendant entre la bague (14) et le corps (12), le dispositif (1 ; 100) comprenant :
- un moule (50) destiné à recevoir l'ébauche, le moule (50) comportant plusieurs parties (54, 56) mobiles entre une configuration fermée dans laquelle les parties (54, 56) définissent une première empreinte (58) adaptée pour former le corps (12) de l'article (10 ; 110), et une configuration ouverte dans laquelle les parties (54, 56) sont écartées les unes des autres pour démouler l'article (10 ; 110), et
- une tête de soufflage (52) mobile entre une position de soufflage dans laquelle la tête de soufflage (52) est appliquée contre le moule (50), et une position de repos dans laquelle la tête de soufflage (52) est à l'écart du moule (50), la tête de soufflage (52) étant adaptée pour injecter au moins un jet de gaz à l'intérieur de l'ébauche dans la position de soufflage,
**caractérisé en ce que** la tête de soufflage (52) comporte au moins une face (76 ; 76A) définissant une deuxième empreinte (78 ; 78A) adaptée pour former au moins une partie (35 ; 35A) de la ou des épaule(s) (18) dans la position de soufflage pendant que le jet de gaz entre dans l'ébauche et gonfle l'ébauche, l'ébauche prenant la forme de la première empreinte (58) et de la deuxième empreinte (78 ; 78A).

2. Dispositif (1 ; 100) selon la revendication 1, **caractérisé en ce qu'**il comporte un système de déplacement des parties (54, 56) du moule (50) entre la configuration fermée et la configuration ouverte, la face (76 ; 76A) de la tête de soufflage (52) étant configurée dans la position de soufflage de telle manière que la partie (35 ; 35A) de la ou des épaule(s) (18) formée par la face (76 ; 76A) comporte au moins une portion située dans un secteur angulaire (α ; α_{A}) par rapport à l'axe (D), ladite portion étant en contre-dépouille par rapport au déplacement d'une des parties (54, 56) du moule (50) située au moins partiellement dans ledit secteur angulaire (α ; α_{A}).

3. Dispositif (1 ; 100) selon la revendication 1 ou 2, **caractérisé en ce que** la face (76 ; 76A) comporte des formes en relief ou en creux adaptées pour former des motifs (36 ; 36A) sur la ou les épaule(s) (18) de l'article (10 ; 110).

4. Dispositif (1 ; 100) selon les revendications 2 et 3, **caractérisé en ce que** les formes en relief ou en creux de la face (76 ; 76A) sont configurées pour que les motifs (36 ; 36A) formés sur la ou les épaule(s) (18) de l'article (10 ; 110) comportent au moins un motif situé dans un secteur angulaire (α ; α_{A}) par rapport à l'axe (D), ledit motif étant en contre-dépouille par rapport au déplacement d'une des parties (54, 56) du moule (50) située dans le secteur angulaire (α ; α_{A}).

5. Dispositif (100) selon l'une quelconque des revendication 1 à 4, **caractérisé en ce que** la face (76A) présente une forme générale sensiblement plane, la forme générale définissant dans la position de soufflage un angle aigu (β_{A}) avec l'axe (D), l'angle aigu (β_{A}) s'ouvrant du côté opposé au corps (12) de l'article (110) selon l'axe (D).

6. Dispositif (100) selon l'une quelconque des revendication 1 à 5, **caractérisé en ce que** la tête de soufflage (52) comprend au moins une deuxième face (76B) définissant une troisième empreinte (78B) disjointe de la deuxième empreinte (78A) et adaptée pour former au moins une deuxième partie (35B) de la ou des épaule(s) (18) dans la position de soufflage, la première face (76A) et la deuxième face (76B) se situant de préférence de part et d'autre de l'axe (D) dans la position de soufflage.

7. Dispositif (1 ; 100) selon l'une quelconque des revendication 1 à 6, **caractérisé en ce qu'**il comporte un bras (53) sur lequel est fixée la tête de soufflage (52), le bras (53) étant adapté pour déplacer la tête de soufflage (52) en un seul bloc sensiblement selon l'axe (D) entre la position de soufflage et la position de repos.

8. Dispositif (100) selon l'une quelconque des revendication 1 à 7, **caractérisé en ce qu'**il comprend au moins un premier organe de guidage (112) solidaire de la tête de soufflage (52), et au moins un deuxième organe de guidage (116) solidaire du moule (50) et adapté pour coopérer par contact avec le premier organe de guidage (112) de manière à fixer la position angulaire de la face (76A) dans la position de soufflage par rapport au moule (50) autour de l'axe (D).

9. Procédé pour former un article (10 ; 110) creux en verre à partir d'une ébauche, l'article (10 ; 110) comportant une bague (14) s'étendant autour d'un axe (D), un corps (12), et une ou plusieurs épaule(s) (18) s'étendant entre la bague (14) et le corps (12), le procédé comprenant au moins les étapes suivantes :
- réception d'une ébauche de l'article (10 ; 110) dans un moule (50) comportant plusieurs parties (54, 56) mobiles entre une configuration fermée, dans laquelle les parties (54, 56) définissent une première empreinte (58) adaptée pour former le corps (12) de l'article (10 ; 110), et une configuration ouverte dans laquelle les parties (54, 56) sont écartées les unes des autres pour démouler l'article (10 ; 110), et
- injection d'au moins un jet de gaz à l'intérieur de l'ébauche à l'aide d'une tête de soufflage (52) mobile entre une position de soufflage dans laquelle la tête de soufflage (52) est appliquée contre le moule (50), et une position de repos dans laquelle la tête de soufflage (52) est à l'écart du moule, la tête de soufflage (52) étant dans la position de soufflage pendant l'injection,
**caractérisé en ce que** la tête de soufflage (52) comporte au moins une face (76 ; 76A) définissant une deuxième empreinte (78 ; 78A) adaptée pour former au moins une partie (35 ; 35A) du ou des épaule(s) (18) dans la position de soufflage pendant que le jet de gaz entre dans l'ébauche et gonfle l'ébauche, l'ébauche prenant la forme de la première empreinte (58) et de la deuxième empreinte (78 ; 78A)

## Patentansprüche

1. Vorrichtung (1; 100) zum Formen eines hohlen Glasartikels (10; 110) aus einem Rohling, wobei der Artikel (10; 110) einen Ring (14), der sich um eine Achse (D) herum erstreckt, einen Körper (12) und eine oder mehrere sich zwischen dem Ring (14) und dem Körper (12) erstreckende Schulter(n) (18) aufweist, die Vorrichtung (1; 100) aufweisend:
- eine Form (50), welche dazu vorgesehen ist, den Rohling aufzunehmen, wobei die Form (50) mehrere Teile (54, 56) aufweist, die zwischen einer Geschlossen-Konfiguration, in welcher die Teile (54, 56) einen ersten Formgebungsabschnitt (58), der dazu eingerichtet ist, den Körper (12) des Artikels (10; 110) zu formen, definieren, und einer Offen-Konfiguration, in welcher die Teile (54, 56) voneinander entfernt sind zum Entformen des Artikels (10; 110), bewegbar sind, und
- einen Blaskopf (52), welcher zwischen einer Blasposition, in welcher der Blaskopf (52) gegen die Form (50) anliegt, und einer Ruheposition, in welcher der Blaskopf (52) im Abstand von der Form (50) ist, bewegbar ist, wobei der Blaskopf (52) dazu eingerichtet ist, in der Blasposition wenigstens einen Gasstrahl in das Innere des Rohlings zu injizieren,
**gekennzeichnet dadurch, dass** der Blaskopf (52) wenigstens eine Fläche (76; 76A) aufweist, die einen zweiten Formgebungsabschnitt (78; 78A) definiert, der dazu eingerichtet ist, in der Blasposition wenigstens einen Teil (35; 35A) der Schulter(n) (18) zu formen, während der Gasstrahl in den Rohling eintritt und den Rohling aufbläst, wobei der Rohling die Gestalt des ersten Formgebungsabschnitts (58) und des zweiten Formgebungsabschnitts (78, 78A) annimmt.

2. Vorrichtung (1; 100) gemäß Anspruch 1, **gekennzeichnet dadurch, dass** sie eine System zur Bewegung der Teile (54, 56) der Form (50) zwischen der Geschlossen-Konfiguration und der Offen-Konfiguration aufweist, wobei die Fläche (76; 76A) des Blaskopfs (52) in der Blasposition derart konfiguriert ist, dass der durch die Fläche (76; 76A) geformte Teil (35; 35A) der Schulter(n) (18) wenigstens einen Abschnitt, der in einem Winkelbereich (α; α_{A}) bezüglich der Achse (D) liegt, aufweist, wobei besagter Abschnitt bezüglich der Bewegung eines der Teile (54, 56) der Form (50), das wenigstens teilweise in dem Winkelbereich (α; α_{A}) angeordnet ist, in Hinterschneidung ist.

3. Vorrichtung (1; 100) gemäß Anspruch 1 oder 2, **gekennzeichnet dadurch, dass** die Fläche (76; 76A) erhabene oder vertiefte Formen aufweist, die dazu eingerichtet sind, Muster (36; 36A) an der oder den Schulter(n) (18) des Artikels (10; 110) zu bilden.

4. Vorrichtung (1; 100) gemäß den Ansprüchen 2 und 3, **gekennzeichnet dadurch, dass** die erhabenen oder vertieften Formen der Fläche (76; 76A) konfiguriert sind, so dass die an der oder den Schulter(n) (18) des Artikels (10; 110) gebildeten Muster (36; 36A) wenigstens ein Muster aufweisen, das in einem Winkelbereich (α; α_{A}) bezüglich der Achse (D) angeordnet ist, wobei das Muster bezüglich der Bewegung eines der Teile (54, 56) der Form (50), das in dem Winkelbereich (α; α_{A}) angeordnet ist, in Hinterschneidung ist.

5. Vorrichtung (100) gemäß irgendeinem der Ansprüche 1 bis 4, **gekennzeichnet dadurch, dass** die Fläche (76A) eine im Wesentlichen ebene Gesamtform aufweist, wobei die Gesamtform in der Blasposition einen spitzen Winkel (β_{A}) mit der Achse (D) definiert, wobei der spitze Winkel (β_{A}) sich zur dem Körper (12) des Artikels (110) gemäß der Achse (D) entgegengesetzten Seite öffnet.

6. Vorrichtung (100) gemäß irgendeinem der Ansprüche 1 bis 5, **gekennzeichnet dadurch, dass** der Blaskopf (52) wenigstens eine zweite Fläche (76B) aufweist, welche einen dritten Formgebungsabschnitt (78B) aufweist, der von dem zweiten Formgebungsabschnitt (78A) getrennt ist und eingerichtet ist, um in der Blasposition wenigstens einen zweiten Teil (35B) der Schulter(n) (18) zu formen, wobei die erste Fläche (76A) und die zweite Fläche (76B) vorzugsweise in der Blasposition auf beiden Seiten der Achse (D) befinden.

7. Vorrichtung (1; 100) gemäß irgendeinem der Ansprüche 1 bis 6, **gekennzeichnet dadurch, dass** sie einen Arm (53), an welchem der Blaskopf (52) fixiert ist, aufweist, wobei der Arm (53) dazu eingerichtet ist, den Blaskopf (52) als ein einziges Teil im Wesentlichen der Achse (D) nach zwischen der Blasposition und der Ruheposition zu bewegen.

8. Vorrichtung (100) gemäß irgendeinem der Ansprüche 1 bis 7, **gekennzeichnet dadurch, dass** sie wenigstens ein erstes Führungsmittel (112), das mit dem Blaskopf (52) fest verbunden ist, und wenigstens ein zweites Führungsmittel (116), das mit der Form (50) fest verbunden ist und dazu eingerichtet ist, um mit dem ersten Führungsmittel (112) durch Kontakt zusammenzuwirken, so dass die Winkelposition der Fläche (76A) in der Blasposition bezüglich der Form (50) um die Achse (D) herum fest ist, aufweist

9. Verfahren zum Formen eines hohlen Glasartikels (10; 110) aus einem Rohling, wobei der Artikel (10; 110) einen Ring (14), der sich um eine Achse (D) erstreckt, einen Körper (12) und eine oder mehrere sich zwischen dem Ring (14) und dem Körper (12) erstreckende Schulter(n) (18) aufweist, wobei das Verfahren wenigstens die folgenden Schritte aufweist:
- Aufnehmen eines Rohlings des Artikels (10; 110) in einer Form (50), die mehrere Teile (54, 56) aufweist, welche zwischen einer Geschlossen-Konfiguration, in welcher die Teile (54, 56) einen ersten Formgebungsabschnitt (58), der dazu eingerichtet ist, den Körper (12) des Artikels (10; 110) zu formen, definieren, und einer Offen-Konfiguration, in welcher die Teile (54, 56) voneinander entfernt sind zum Entformen des Artikels (10; 110), bewegbar sind, und
- Injizieren wenigstens eines Gasstrahls in das Innere des Rohlings mittels eines Blaskopfs (52), welcher zwischen einer Blasposition, in welcher der Blaskopf (52) gegen die Form (50) anliegt, und einer Ruheposition, in welcher der Blaskopf (52) im Abstand von der Form ist, bewegbar ist, wobei der Blaskopf (52) bei der Injektion in der Blasposition ist,
**gekennzeichnet dadurch, dass** der Blaskopf (52) wenigstens eine Fläche (76; 76A) aufweist, die einen zweiten Formgebungsabschnitt (78; 78A) definiert, der dazu eingerichtet ist, in der Blasposition wenigstens einen Teil (35; 35A) der Schulter(n) (18) zu formen, während der Gasstrahl in den Rohling eintritt und den Rohling aufbläst, wobei der Rohling die Gestalt des ersten Formgebungsabschnitts (58) und des zweiten Formgebungsabschnitts (78, 78A) annimmt.

## Claims

1. A device (1; 100) for forming a hollow glass article (10; 110) from a gob, the article (10; 110) including a ring (14) extending around an axis (D), a body (12), and one or several shoulders (18) extending between the ring (14) and the body (12), the device (1; 100) comprising:
- a mold (50) intended to receive the gob, the mold (50) including several movable portions (54, 56) between a closed configuration in which the portions (54, 56) define a first imprint (58) adapted for forming the body (12) of the article (10; 110), and an open configuration in which the portions (54, 56) are moved away from each other in order to remove the article (10; 110) from the mold, and
- a movable blowing head (52) between a blowing position in which the blowing head (52) is applied against the mold (50), and a rest position in which the blowing head (52) is at a distance from the mold (50), the blowing head (52) being adapted so as to inject at least one gas jet into the inside of the gob in the blowing position,
**characterized in that** the blowing head (52) includes at least one face (76; 76A) defining a second imprint (78; 78A) adapted for forming at least one portion (35; 35A) of the shoulder(s) (18) in the blowing position while said gas jet enters and inflates the parison, the parison assuming the shape of the first imprint (58) and of the second imprint (78; 78A).

2. The device (1; 100) according to claim 1, **characterized in that** it includes a system for moving the portions (54, 56) of the mold (50) between the closed configuration and the open configuration, the face (76; 76A) of the blowing head (52) being configured in the blowing position so that the portion (35; 35A) of the shoulder(s) (18) formed by the face (76; 76A) includes at least one portion located in an angular sector (α; α_{A}) a relatively to the axis (D), said portion being undercut relatively to the displacement of one of the portions (54, 56) of the mold (50) at least partly located in said angular sector (α; α_{A}).

3. The device (1; 100) according to claim 1 or 2, **characterized in that** the face (76; 76A) includes raised or recessed shapes adapted so as to form patterns (36; 36A) on the shoulder(s) (18) of the article (10; 110).

4. The device (1; 100) according to claims 2 and 3, characterizing that the raised or recessed shapes of the face (76; 76A) are configured so that the patterns (36; 36A) formed on the shoulder(s) (18) of the article (10; 110) include at least one pattern located in an angular sector (α; α_{A}) relatively to the axis (D), said pattern being undercut relatively to the displacement of one of the portions (54, 56) of the mold (50) located in the angular sector (α; α_{A}).

5. The device (100) according to any of claims 1 to 4, **characterized in that** the face (76A) has a general substantially planar shape, the general shape defining in the blowing position an acute angle (β_{A}) with the axis (D), the acute angle (β_{A}) opening on the side opposite to the body (12) of the article (110) along the axis (D).

6. The device (100) according to any of claims 1 to 5, **characterized in that** the blowing head (52) comprises at least one second face (76B) defining a third imprint (78B) disconnected from the second imprint (78A) and adapted for forming at least one second portion (35B) of the shoulder(s) (18) in the blowing position, the first face (76A) and the second face (76B) being preferably located on either side of the axis (D) in the blowing position.

7. The device (1; 100) according to any of claims 1 to 6, **characterized in that** it includes an arm (53) on which is attached the blowing head (52), the arm (53) being adapted for moving the blowing head (52) in a single block substantially along the axis (D) between the blowing position and the rest position.

8. The device (100) according to any of claims 1 to 7, **characterized in that** it comprises at least a one first guiding member (112) secured to the blowing head (52), and at least one second guiding member (116) secured to the mold (50) and adapted for cooperating by contact with the first guiding member (112) so as to set the angular position of the face (76A) in the blowing position relatively to the mold (50) around the axis (D).

9. A method for forming a hollow glass article (10; 110) from a gob, the article (10; 110) including a ring (14) extending around an axis (D), a body (12), and one or several shoulders (18) extending between the ring (14) and the body (12), the method comprising at least the following steps:
- receiving a gob of the article (10; 110) in a mold (50) including several movable portions (54, 56) between a closed configuration, in which the portions (54, 56) define a first imprint (58) adapted for forming the body (12) of the article (10; 110), and an open configuration in which the portions (54, 56) are moved away from each other for removing the article (10; 110) from the mold, and
- injecting at least one gas jet into the inside of the gob by a movable blowing head (52) between a blowing position in which the blowing head (52) is applied against the mold (50), and a rest position in which the blowing head (52) is at a distance from the mold, the blowing head (52) being in the blowing position during the injection,
**characterized in that** the blowing head (52) includes at least one face (76; 76A) defining a second imprint (78; 78A) adapted for forming at least one portion (35; 35A) of the shoulder(s) (18) in the blowing position while said gas jet enters and inflates the parison, the parison assuming the shape of the first imprint (58) and of the second imprint (78; 78A).
